Europäisches Patentamt

European Patent Office

Office européen des brevets

(11) Veröffentlichungsnummer : **0 075 186**
**B1**

(12) EUROPÄISCHE PATENTSCHRIFT

(45) Veröffentlichungstag der Patentschrift :
28.08.85

(51) Int. Cl.⁴ : **C 09 C   1/00**

(21) Anmeldenummer : 82108244.3

(22) Anmeldetag : 08.09.82

(54) **Perlglanzpigmente, ihre Herstellung und ihre Verwendung.**

(30) Priorität : 23.09.81 DE 3137809

(43) Veröffentlichungstag der Anmeldung :
30.03.83 Patentblatt 83/13

(45) Bekanntmachung des Hinweises auf die Patenterteilung : 28.08.85 Patentblatt 85/35

(84) Benannte Vertragsstaaten :
BE DE FR GB IT NL

(56) Entgegenhaltungen :
US-A- 3 087 828
US-A- 3 342 617

(73) Patentinhaber : Merck Patent Gesellschaft mit beschränkter Haftung
Frankfurter Strasse 250
D-6100 Darmstadt (DE)

(72) Erfinder : Bernhard, Horst, Dr.
Haus Nr. 52
A-4164 Schwarzenberg (AT)

**Beschreibung**

Die Erfindung betrifft Perlglanzpigmente mit grüner Pulverfarbe, die auf der Plättchenoberfläche eine Deckschicht aus Chrom(III)-oxid tragen.

Solche Pigmente sind z. B. aus dem deutschen Patent Nr. 14 67 468 an sich bekannt. Zur Herstellung derartiger Pigmente werden mit Metalloxiden beschichtete Glimmerplättchen mit einer Deckschicht aus Chrom(III)-hydroxid versehen, die beim Trocknen und Calzinieren der Pigmente in eine Chrom(III)-oxid-Schicht überführt wird.

Um ein Pigment mit optimalen Perlglanzeigenschaften zu erhalten, ist es notwendig, daß die die Beschichtung bildenden Primärteilchen eine Größe von unterhalb etwa 100 nm besitzen sollten, da bei größeren Teilchen eine Streuung des einfallenden Lichts einsetzt, wodurch die den Perlglanz bewirkenden Interferenzeffekte beeinträchtigt werden. Während jedoch die Beschichtung mit Chromhydroxid so geführt werden kann, daß auch relativ dicke Hydroxidschichten in glatter Schicht auf die Unterlage aufgefällt werden können, ist es bisher nicht gelungen, daraus bei der Calzinierung eine geschlossene Chromoxid-Schicht zu erzeugen. Vielmehr entstehen beim Calzinieren durch Schrumpfungsvorgänge bei der Umwandlung von Hydroxid in das Oxid rissige körnige Überzüge, durch welche die Glanzeigenschaften der Präparate stark verschlechtert werden. In der rissigen und grobkörnigen Chromoxidschicht können auch keine Interferenzeffekte auftreten, so daß die färbende Chromoxidschicht den Basispigmentplättchen eher störend aufliegt.

Bisher war es nicht möglich, Chromoxid in der für eine kräftige Grünfärbung notwendigen Menge in geschlossener Schicht und in der nötigen Feinheit auf Perlglanzpigmente aufzubringen, um hochglänzende Pigmente mit den gewünschten Interferenzeffekten zu erhalten.

Es bestand daher die Aufgabe, ein Verfahren zu finden, nach dem auch Perlglanzpigmente mit einer Chromoxidschicht in ausreichender Dicke belegt werden können, ohne daß Glanz- und Interferenzeffekte beeinträchtigt werden.

Diese Aufgabe wurde durch die vorliegende Erfindung gelöst. Es wurde nämlich gefunden, daß überraschenderweise eine Chromhydroxidschicht, die vor dem Glühen mit Phosphationen beladen wird, sich beim Calzinieren zu einem gleichmäßigen transparenten Überzug verdichtet, wodurch Perlglanzpigmente mit grüner Pulverfarbe und sehr guten Glanzeigenschaften entstehen. Überraschenderweise wird dieser Effekt bereits mit relativ geringen Phosphatmengen erzielt.

Aus der US-A-3 342 617 sind Pigmente auf der Basis von mit Metalloxiden beschichteten Glimmerschuppen bekannt, wobei als Metalloxid auch Chromoxid aufgebracht sein kann, die als Deckschicht eine Eisen- oder Manganpyrophosphat-Schicht besitzen. Eine Anregung in Bezug auf den überraschend vorteilhaften Effekt, den ein Chromphosphat-Anteil in einer Chromoxid-Deckschicht ausübt, konnte dieser Publikation nicht entnommen werden.

Gegenstand der Erfindung sind daher Perlglanzpigmente auf Basis von mit Metalloxiden beschichteten Glimmerplättchen, die eine Deckschicht aus Chrom(III)-oxid tragen, die dadurch gekennzeichnet sind, daß die Chromoxidschicht mindestens 0,05 Mol.-% Chromphosphat enthält.

Gegenstand der Erfindung ist auch ein Verfahren zur Herstellung von Perlglanzpigmenten mit grüner Pulverfarbe durch Beschichten von mit Metalloxiden beschichteten Glimmerpigmenten mit einer zusätzlichen Chrom(III)-hydroxid-Deckschicht und Calzinieren des so gewonnenen Pigments, das dadurch gekennzeichnet ist, daß das Pigment nach der Beschichtung mit Chrom(III)-hydroxid mit einer wäßrigen Lösung behandelt wird, die mindestens 0,05 Mol Phosphationen/Mol Chromhydroxid in der Schicht enthält.

Gegenstand der Erfindung ist auch die Verwendung dieser Perlglanzpigmente in Körperpflegemitteln.

Der Vorteil der erfindungsgemäßen Pigmente besteht darin, daß nunmehr nahezu beliebig dicke Chromoxidschichten aufgebracht werden können, ohne daß eine wesentliche Glanzverminderung eintritt. Im Gegenteil ist es so, daß die Chromoxidschicht aufgrund ihrer glatten einheitlichen Struktur und der kleinen Teilchengröße entsprechend ihrer Schichtdicke wesentlich zur Bildung der Interferenzfarbe beiträgt, wobei die optischen Gesetze für Interferenzen in dünnen Schichten gelten und wobei die Eigenfarbe des Chromoxids wie ein zusätzliches Filter wirkt.

Durch die Eigenfarbe der Chromoxidschicht besitzen die erfindungsgemäßen Perlglanzpigmente eine grüne Pulverfarbe, während sich die Interferenzfarbe aus der Gesamtschichtdicke der Metalloxidschicht und der Chromoxidschicht ergibt. Durch Auswahl des Basispigments und der Schichtdicke des Chromoxids kann daher sowohl die gewünschte Interferenzfarbe als auch die Farbsättigung der grünen Pulverfarbe beliebig gesteuert werden.

Als Basispigment kann an sich jedes mit Metalloxiden beschichtete Glimmerpigment dienen. Vorzugsweise werden jedoch mit Titandioxid beschichtete Glimmerpigmente verwendet. Bei den als Basispigmente verwendeten Glimmerschuppenpigmenten handelt es sich in der Regel um Glimmerschuppen mit einem Durchmesser von etwa 5 bis 200 µm und einer Dicke von etwa 0,1 bis 5 µm, die mit einer Metalloxidschicht überzogen sind. Als Metalloxidüberzüge werden wegen des vorteilhaften Brechungsindex haupsätzlich Titandioxid bzw. Titandioxidaquate und/oder Zirkondioxid bzw. Zirkondioxidaquate verwendet. Zusammen mit diesen Metalloxiden oder alternativ dazu können jedoch auch andere farblose oder ggf. auch farbige Metalloxide, wie z. B. $SnO_2$, $Al_2O_3$ oder $Fe_2O_3$ verwendet werden.

2

Ein besonders häufig eingesetztes Pigment ist. z. B. ein Glimmerschuppenpigment, bei dem Glimmerschuppen mit einem Durchmesser von etwa 5 bis 50 $\mu$m und einer Dicke von etwa 0,5 $\mu$m gleichmäßig mit einer gegebenenfalls hydratisierten Titandioxidschicht beschichtet sind, wobei die Glimmeroberfläche eine $TiO_2$-Schicht von etwa 50 bis 500 mg $TiO_2/m^2$ trägt. Diese Perlglanzpigmente besitzen je nach der Schichtdicke der aufgefällten Metalloxidschicht verschiedene Interferenzfarben. In der Regel handelt es sich um Produkte, die bei höheren Temperaturen von etwa 600 bis 1000 °C calziniert sind. Alle diese Pigmente sind bekannt und z. B. in den deutschen Patentschriften 14 67 468, 19 59 998 und 20 09 566 und den deutschen Offenlegungsschriften 20 60 850, 21 06 613, 22 14 545, 22 15 191, 22 44 298, 23 13 331, 23 13 332, 24 29 762, 25 22 572, 25 22 573 und 26 28 353 beschrieben.

Durch die Beschichtung der Basispigmente mit Chromoxid wird die Interferenzfarbe des Basispigments verschoben in Bereiche, die größerer optischer Schichtdicke entsprechen. Dadurch entstehen insbesondere bei Verwendung von Basispigmenten mit blauer, grüner oder silberner Glanzfarbe besonders reizvolle Mischfarben. Grundsätzlich sind jedoch auch Basispigmente mit gelber oder rötlicher Interferenzfarbe für die Beschichtung nach dem erfindungsgemäßen Verfahren geeignet und liefern Präparate, die für besondere kosmetische Zwecke eingesetzt werden können.

Die Beschichtung der Basispigmente mit Chromhydroxid erfolgt nach an sich bekannten Methoden. Da stabile wäßrige Lösungen von Chrom(III)-Salzen stark sauer sind, kann man entweder so vorgehen, daß die Aufschlämmung des Basispigments in einer stark sauren Chrom (III)-Salzlösung langsam neutralisiert wird, wobei das dabei gebildete Chromhydroxid auf die Pigmentschuppen aufgefällt wird, oder es wird zur wäßrigen Aufschlämmung des Basispigments gleichzeitig eine Chrom (III)-Salzlösung und eine Base zulaufen lassen, so daß in der Aufschlämmung ein zur Ausfällung von Chromhydroxid geeigneter pH-Wert aufrechterhalten wird. Der pH-Wert bei der Fällung sollte oberhalb von 3 liegen, bevorzugt wird ein pH-Wert von zwischen 4, 5 und 9. Zur Einstellung des pH-Wertes kann an sich jede Base verwendet werden. Beispielhaft werden genannt : Ammoniak (in Lösung oder gasförmig), Natronlauge oder Kalilauge. Bevorzugt wird Ammoniaklösung verwendet.

Zur Durchführung der Fällung kann im Prinzip jede Chrom(III)-Ionen-haltige Lösung verwendet werden, wobei darunter auch hydrolysierbare Chrom(III)-Komplexionen, wie z. B. der Amminkomplex zu verstehen sind. Vorzugsweise werden Chromchlorid- oder Chromalaunlösungen verwendet.

Die Chrom(III)-Ionen-haltige Lösung kann jedoch auch in der Aufschlämmung des Basispigments in situ erzeugt werden, dadurch daß man eine Chrom(VI)-Ionen-haltige Lösung mit einem geeigneten Reduktionsmittel, wie z. B. Hydrazin reduziert. Dazu kann man z. B. Lösungen von Kaliumdichromat und Hydrazinsulfat entweder gleichzeitig zu der Aufschlämmung so zudosieren, daß immer ein leichter Überschuß des Reduktionsmittels im Reaktionsgefäß vorliegt, oder es kann Chromat bzw. Hydrazinsulfat in der Aufschlämmung vorgelegt werden und die andere Komponente zudosiert werden.

Gleich auf welche Weise die Fällung erfolgt, sollte die Fällungsgeschwindigkeit so eingestellt werden, daß zu jedem Zeitpunkt der Beschichtung nur so viel Chromhydroxid entsteht, wie auf der Pigmentoberfläche angelagert werden kann, ohne daß zusätzlich Keime in der Lösung entstehen.

Die Fällung des Chromhydroxids kann an sich bei jeder Temperatur zwischen Gefrier- und Siedepunkt der Aufschlämmung vorgenommen werden. Es hat sich jedoch gezeigt, daß bei relativ tiefen Temperaturen Nebenfällungen auftreten können. Es wird deshalb bevorzugt bei erhöhter Temperatur, z. B. etwa 50 bis 100 °C, insbesondere etwa 60 bis 90 °C gearbeitet. Jedoch werden auch bei anderen Temperaturen in der Regel qualitativ gute Fällungen erreicht.

Nach Auffällung der gewünschten Chromhydroxidmenge wird noch etwa eine halbe Stunde nachgerührt, vorzugsweise auch bei erhöhter Temperatur um etwa 70 °C und es wird dann eine Phosphationen-haltige Lösung langsam zulaufen lassen. Zur Vervollständigung der Umsetzung mit der Chromhydroxidschicht sollte danach noch einige Zeit, z. B. etwa eine halbe bis eine Stunde bei erhöhter Temperatur gerührt werden.

Zur Lieferung von Phosphationen eignen sich sowohl Orthophosphorsäure als auch ihre primären, sekundären und tertiären Salze sowie auch polymere Phosphate. Voraussetzung ist lediglich, daß sie eine ausreichende Löslichkeit aufweisen, um in wäßriger Lösung in die Aufschlämmung des mit Chromhydroxid-beschichteten Basispigments eingebracht werden zu können. Geeignet sind neben Phosphorsäure z. B. $KH_2PO_4$, $Na_2HPO_4 \cdot 12 H_2O$, $Na_3PO_4 \cdot 12 H_2O$, $Na_4P_2O_7 \cdot 7 H_2O$ und $(NaPO_3)_x$. Unabhängig von der Art des Phosphationen-haltigen Materials werden praktisch die gleichen Ergebnisse erzielt.

Welche Menge Phosphationen zugesetzt wird, richtet sich nach der Menge des aufgefällten Chromhydroxids. Es hat sich jedoch gezeigt, daß bereits eine sehr geringe Phosphatmenge geeignet ist, die gewünschte Verbesserung der Glanzeigenschaften der Pigmente zu bewirken. So wird bereits bei einer Menge von 0,1 % Phosphat, bezogen auf die zur Bildung von $CrPO_4$ notwendige stöchiometrische Menge, eine sehr deutliche Verbesserung erzielt. Bei etwa 0,5 % Phosphat wird bereits der volle Effekt erzielt. Durch eine weitere Erhöhung der Phosphatmenge können die Glanzeigenschaften der Pigmente nicht weiter verbessert werden, es wird aber andererseits auch kein negativer Einfluß einer höheren Phosphatmenge deutlich. So können ohne weiteres Mengen von bis zu 100 % der stöchiometrischen Menge und auch weit darüber zugesetzt werden, ohne daß das die Glanzeigenschaften der Präparate negativ beeinflußt. Bei sehr hohen Phosphatmengen kann natürlich nicht mehr die gesamte Phosphatmenge in die Beschichtung aufgenommen werden. In jedem Fall sollte die Schicht mindestens 0,05 % Phosphat enthalten, vorzugsweise mindestens 0,1 %.

Nach der Beschichtung der Basispigmente mit Chromhydroxid und der erfindungsgemäßen Nachbehandlung mit Phosphationen werden die Pigmente auf übliche Weise gewonnen. In der Regel werden sie dazu abfiltriert, gewaschen und getrocknet und geglüht. Beim Glühen, das bei Temperaturen von etwa 600 bis 1000 °C, vorzugsweise etwa 700 bis 900 °C erfolgt, wird die Chromhydroxidschicht entwässert und in $Cr_2O_3$ umgewandelt. Bei dieser Calzinierung, die üblicherweise für etwa eine halbe bis eine Stunde erfolgt, zeigt es sich, daß die erfindungsgemäßen Pigmente eine rißfreie Schicht mit sehr guten Glanzeigenschaften besitzen. Insbesondere zeigen sich die Vorteile des erfindungsgemäßen Verfahrens bei solchen Pigmenten, die relativ dicke Chromoxidschichten tragen, da bei diesen die Gefahr der Rißbildung besonders groß ist, und die nach bekannten Verfahren praktisch nicht mit befriedigenden Glanzeigenschaften herstellbar waren. So können nach dem erfindungsgemäßen Verfahren erstmals auch Chromoxid-beschichtete Pigmente mit guten Glanzeigenschaften hergestellt werden, die z. B. bis zu 60 % $Cr_2O_3$ und darüber enthalten können. Die erfindungsgemäßen Pigmente sollten in jedem Fall einen Gehalt von mindestens 5 Gew.-% $Cr_2O_3$ besitzen.

Die erfindungsgemäßen Pigmente können wie die bisher bekannten verwendet werden, also z. B. als Zusatz zu Kunststoffen, Farben oder Lacken, insbesondere aber auch in der Kosmetik. Dabei werden die neuen Perlglanzpigmente in der Regel in Mengen zwischen 0,1 und 80 Gew.-% zugesetzt. Übliche Zubereitungsformen sind z. B. Puder, Salben und Fettstifte, z. B. Lidschattenstifte, Lidschattenpuderkompakte, flüssige Zubereitungen für Lidschatten und Lidstrich, Make-up in Stiftform, Make-up-Puderkompakte, Make-up-Emulsionen, Make-up-Fettgel, Lichtschutzemulsionen und Bräunungsemulsionen, Schaumbadkonzentrate mit Farbglanz und Hautpflegelotionen. Die erfindungsgemäßen Perlglanzpigmente zeichnen sich dabei durch ihre kräftige grüne Pulverfarbe und ihre hervorragenden Glanzeigenschaften aus.

In den nachfolgenden Beispielen wird die Herstellung einiger erfindungsgemäßer Perlglanzpigmente beschrieben. Mit gleich gutem Erfolg lassen sich anstelle der dabei verwendeten Basispigmente auch andere Basispigmente beschichten und ebenso sind andere Variationen der Verfahrensbedingungen entsprechend der vorangegangenen Beschreibung möglich.

## Beispiel 1

Zu einer Suspension von 100 g eines $TiO_2$-Glimmerpigments mit blauer Interferenzfarbe (Plättchengröße 10 bis 60 μm, 50 % Glimmer, 50 % $TiO_2$) in 2 l Wasser wird bei 70 °C langsam, innerhalb von 2 Stunden eine Lösung von 175 g $KCr(SO_4)_2 \times 12 H_2O$ in 0,6 l Wasser zulaufen lassen. Durch gleichzeitiges Zudosieren einer 5 %igen $NH_3$-Lösung wird der pH-Wert der Suspension konstant bei etwa 6 gehalten. Nach etwa halbstündigem Nachrühren wird innerhalb von 15 Minuten eine Lösung von 5 g $Na_2HPO_4 \cdot 12 H_2O$ in 100 ml Wasser zugegeben und noch etwa 1 Stunde bei 70 °C gerührt. Danach wird filtriert, mit Wasser gewaschen, bei etwa 120 °C getrocknet und für 30 Minuten bei 840 °C geglüht.

Zur Beurteilung der Glanzeigenschaften wird das Pigment als etwa 2 %ige Suspension in einen Nitrozellulose-Acrylharzlack eingearbeitet und zu einer Folie von 500 μm Naßfilmdicke auf einer Karte ausgezogen und nach Trocknen des Films beurteilt. Dabei zeigt das gemäß dem Beispiel hergestellte Pigment eine kräftige grüne Interferenzfarbe und einen lebhaften grünen Glanz.

Ein auf gleiche Weise hergestelltes Pigment, das jedoch nicht mit Phosphat behandelt wird, zeigt einen verringerten Glanz, wobei die Chromoxidbeschichtung zur Bildung der Interferenzfarbe kaum beiträgt.

## Beispiel 2a bis g

Eine Suspension von 10 kg eines $TiO_2$-Glimmerpigment mit blauer Interferenzfarbe (Plättchengröße 10 bis 60 μm, 49 % Glimmer, 51 % $TiO_2$) in 200 l Wasser wird bei 75 °C langsam (Zulaufgeschwindigkeit 20 l/h) mit einer Lösung von 17,5 kg $KCr(SO_4)_2 \cdot 12 H_2O$ in 80 l Wasser versetzt, wobei durch gleichzeitiges Zudosieren einer 5 %igen $NH_3$-Lösung ein pH-Wert von etwa 6 aufrechterhalten wird. Während der Beschichtung mit Chromhydroxid werden nach verschiedenen Zeiten jeweils aliquote Teile der Suspension entnommen und getrennt, aber auf gleiche Weise aufgearbeitet. Dazu wird jede Probe mit 0,5 g $Na_2HPO_4 \cdot 12 H_2O$/g Basispigment in der Probe versetzt, nach halbstündigem Rühren filtriert, gewaschen, getrocknet und für 30 Minuten bei 880 °C geglüht. Dabei werden die folgenden Pigmente erhalten :

| Probe-Nr. | Chromoxidbeschichtung (g $Cr_2O_3$/g Basispigment) |
|---|---|
| 2a | 0,168 |
| 2b | 0,192 |
| 2c | 0,222 |
| 2d | 0,231 |
| 2e | 0,242 |
| 2f | 0,247 |
| 2g | 0,266 |

4

Bei der Beurteilung der erhaltenen Pigmente entsprechend der in Beispiel 1 angegebenen Methode zeigt es sich, daß alle Pigmente einen guten Glanz und hohe Farbkraft besitzen, und daß mit steigender Chromoxidmenge die Interferenzfarbe in Richtung gelb verschoben wird, wie es der Entwicklung von optisch dickeren Schichten entspricht.

### Beispiel 3a bis i

Es werden entsprechend Beispiel 1 Pigmente hergestellt, wobei jedoch in Abweichung von Beispiel 1 unterschiedliche Mengen $Na_2HPO_4 \cdot 12 H_2O$ für die Nachbehandlung verwendet werden. In der folgenden Tabelle ist die Phosphatmenge, die für die einzelnen Pigmente verwendet wird, in Prozent der zur stöchiometrischen Umsetzung zu $CrPO_4$ notwendigen Menge angegeben.

| Probe-Nr | Phosphatmenge |
|---|---|
| 3a | 0 |
| 3b | 0,01 % |
| 3c | 0,1 % |
| 3d | 0,5 % |
| 3e | 1,0 % |
| 3f | 2,0 % |
| 3g | 4,0 % |
| 3h | 10,0 % |
| 3l | 100,0 % |

Die Beurteilung der Pigmente entsprechend der in Beispiel 1 angegebenen Methode ergibt, daß mit 0,1 % Phosphat bereits der Glanz und die Farbe des Pigments vorteilhaft beeinflußt ist, und daß mit 0,5 % Phosphat der gewünschte Grünton und der gute Glanz erreicht ist, und daß höhere Phosphatmengen keine weitere Verbesserung mehr bringen.

### Beispiel 4a bis e

Es werden entsprechend Beispiel 1 Pigmente hergestellt, wobei jedoch in Abweichung zu Beispiel 1 zur Nachbehandlung mit Phosphat die in der folgenden Tabelle aufgeführten Phosphationen-haltigen Substanzen jeweils in einer Menge entsprechend 66 % der stöchiometrischen Menge verwendet werden.

| Probe | Phosphatquelle |
|---|---|
| 4a | $H_3PO_4$ |
| 4b | $KH_2PO_4$ |
| 4c | $Na_3PO_4 \cdot 12 H_2O$ |
| 4d | $Na(PO_3)_x$ |
| 4e | $Na_4P_2O_7 \cdot 10 H_2O$ |

Die Beurteilung der Pigmente entsprechend der in Beispiel 1 angegebenen Methode ergibt, daß die Pigmente unabhängig von der Art der verwendeten Phosphatquelle einen guten Glanz und eine kräftige Farbe besitzen.

**Patentansprüche**

1. Perlglanzpigmente auf Basis von mit Metalloxiden beschichteten Glimmerplättchen, die eine Deckschicht aus Chrom (III)-oxid tragen, dadurch gekennzeichnet, daß die Chromoxid-Schicht mindestens 0,05 Mol.-% Chromphosphat enthält.

2. Perlglanzpigmente nach Anspruch 1, dadurch gekennzeichnet, daß der Chromphosphatgehalt der Chromoxid-Schicht mindestens 0,1 Mol.-% beträgt.

3. Perlglanzpigmente nach Anspruch 1 oder 2, dadurch gekennzeichnet, daß das Basispigment ein mit Titandioxid-beschichtetes Glimmerpigment ist.

4. Perlglanzpigmente nach einem der Ansprüche 1 bis 3, dadurch gekennzeichnet, daß der Chromgehalt, berechnet als $Cr_2O_3$, mindestens 5 Gew.-% beträgt.

5. Verfahren zur Herstellung von Perlglanzpigmenten mit grüner Pulverfarbe durch Beschichten von mit Metalloxiden beschichteten Glimmerpigmenten mit einer zusätzlichen Chrom(III)-hydroxid-Deckschicht und Calzinieren des so gewonnenen Pigments, dadurch gekennzeichnet, daß das Pigment nach der Beschichtung mit Chrom(III)-hydroxid mit einer wäßrigen Lösung behandelt wird, die mindestens 0,05 Mol Phosphationen, bezogen auf 1 Mol Chrom(III) in der Schicht enthält.

6. Verfahren nach Anspruch 5, dadurch gekennzeichnet, daß die Lösung mindestens 0,1 Mol Phosphat/Mol Chrom(III) enthält.

7. Verfahren nach Anspruch 5 oder 6, dadurch gekennzeichnet, daß zur wäßrigen Suspension des mit Chrom(III)-hydroxid beschichteten Pigments eine entsprechende Menge Phosphationen zugegeben wird und die Suspension während etwa 0,5 bis 2 Stunden bei erhöhter Temperatur nachgerührt wird.

8. Verwendung der Perlglanzpigmente nach Anspruch 1 in Körperpflegemitteln.

**Claims**

1. Nacreous pigments based on mica platelets which are coated with metal oxides and carry a top layer of chromium (III) oxide, characterised in that the chromium oxide layer contains at least 0.05 mol% of chromium phosphate.

2. Nacreous pigments according to Claim 1, characterised in that the chromium phosphate content of the chromium oxide layer is at least 0.1 mol%.

3. Nacreous pigments according to Claim 1 or 2, characterised in that the base pigment is a mica pigment which is coated with titanium dioxide.

4. Nacreous pigments according to any one of Claims 1 to 3, characterised in that the chromium content, calculated as $Cr_2O_3$, is at least 5% by weight.

5. Process for preparing nacreous pigments having a green powder colour by coating mica pigments which are coated with metal oxides with an additional chromium(III) hydroxide top layer and calcining the pigment thus obtained, characterised in that after the coating with chromium(III) hydroxide the pigment is treated with an aqueous solution which contains at least 0.05 mol of phosphate ions per 1 mol of chromium(III) in the layer.

6. Process according to Claim 5, characterised in that the solution contains at least 0.1 mol of phosphate per mol of chromium(III).

7. Process according to Claim 5 or 6, characterised in that, to the aqueous suspension of the pigment which is coated with chromium(III) hydroxide, a corresponding amount of phosphate ions is added and the suspension is then stirred for about 0.5 to 2 hours at an elevated temperature.

8. Use of nacreous pigments according to Claim 1, in cosmetics.

**Revendications**

1. Pigments d'un lustre nacré à base de plaquettes de mica enduites d'oxydes métalliques et comportant une couche de recouvrement d'oxyde de chrome(III), caractérisés en ce que la couche d'oxyde de chrome contient au moins 0,05% molaire de phosphate de chrome.

2. Pigments d'un lustre nacré selon la revendication 1, caractérisés en ce que la teneur en phosphate de chrome de la couche d'oxyde de chrome s'élève à au moins 0,1% molaire.

3. Pigments d'un lustre nacré selon la revendication 1 ou 2, caractérisés en ce que le pigment de base est un pigment de mica enduit de dioxyde de titane.

4. Pigments d'un lustre nacré selon une des revendications 1 à 3, caractérisés en ce que la teneur en chrome, calculée en $Cr_2O_3$, est d'au moins 5% en poids.

5. Procédé de préparation de pigments d'un lustre nacré ayant une couleur verte en poudre par enduction de pigments de mica enduits d'oxydes métalliques avec une couche de recouvrement supplémentaire d'hydroxyde de chrome(III) et par calcination du pigment ainsi obtenu, caractérisé en ce que, après l'enduction avec l'hydroxyde de chrome(III), on traite le pigment avec une solution aqueuse contenant au moins 0,05 mole d'ions phosphate, calculé sur 1 mole de chrome(III) se trouvant dans la couche.

6. Procédé selon la revendication 5, caractérisé en ce que la solution contient au moins 0,1 mole de phosphate/mole de chrome(III).

7. Procédé selon la revendication 5 ou 6, caractérisé en ce que, à une suspension aqueuse du pigment enduit d'hydroxyde de chrome(III), on ajoute une quantité correspondante d'ions phosphate et on poursuit l'agitation de la suspension pendant une période d'environ 0,5 à 2 heures à température élevée.

8. Utilisation des pigments d'un lustre nacré selon la revendication 1 dans les agents pour les soins du corps.